# EUROPÄISCHE PATENTSCHRIFT

(11) **EP 1 403 994 B1**
(45) Veröffentlichungstag und Bekanntmachung des Hinweises auf die Patenterteilung: **22.03.2006**
(21) Anmeldenummer: 03090279.5
(22) Anmeldetag: 01.09.2003
(51) Int. Cl.: H02H 1/06, H02H 3/08

(54) **Niederspannungs-Leistungsschalter mit zusätzlicher Schnellauslösung**
Low voltage circuit breaker with additional fast trip
Disjoncteur basse tension avec déclenchement rapide supplémentaire

(30) Priorität: 27.09.2002 DE 10246479
(43) Veröffentlichungstag der Anmeldung: 31.03.2004
(73) Patentinhaber: SIEMENS AKTIENGESELLSCHAFT, 80333 München (DE)
(72) Erfinder: Buxton, Clifford A., 14165 Berlin (DE); Franke, Henry, 13189 Berlin (DE); Liebetruth, Marc, 16548 Glienicke (DE); Pancke, Andreas, 13507 Berlin (DE); Röhl, Wolfgang, 13503 Berlin (DE)

(56) Entgegenhaltungen:
- EP-A- 0 037 751
- US-A- 4 060 844
- US-A- 4 884 164

## Beschreibung

Die Erfindung betrifft einen Niederspannungs-Leistungsschalter mit zusätzlicher Schnellauslösung durch einen schnellen Magnetauslöser und einem vom zu überwachenden Hauptstrompfad gespeisten Energiewandler, dessen Gleichspannungsausgang an einen Ladekondensator einer Auslöseschaltung geführt ist.

Niederspannungs-Leistungsschalter, mit denen ein Netz auf Kurzschlüsse und Überströme überwacht wird, weisen einen Auslösemagneten auf, dessen Auslösung von einer Auslöseschaltung bewirkt wird. Der Auslösemagnet ist im Leistungsschalter eingebaut und wirkt mit einer Verklinkungseinrichtung zusammen, wobei in modernen Schalterversionen Auslöseeinheit und Schalteinheit als getrennte, zusammenfügbare Einheiten ausgeführt sind. Darüber hinaus können die Leistungsschalter weitere Elektromagneten enthalten, welche es beispielsweise erlauben, den Leistungsschalter ferngesteuert einzuschalten, oder die als Unterspannungsauslöser beziehungsweise als zusätzliche Arbeitsstromauslöser fungieren. Beispiele für den Einbau derartiger Hilfsauslöser sind in der US-A 4,166,260 für Kompakt-Leistungsschalter und in der DE-A 36 12 119 sowie der US-A 3,916,674 für große Leistungsschalter beschrieben.

Dokument US-A-4 884 164 offenbart einen Miederspannungs-Leistungsschalter gemäß dem Oberbegriff des Anspruchs 1.

Die Energie für die Auslöseschaltung der Leistungsschalter wird zweckmäßig aus dem Netz selber bezogen. Neben einem Stromwandler zur Messung der zu überwachenden Ströme ist dazu ein zweiter Wandler für die Energiebereitstellung nötig, dessen gleichgerichtete Spannung, gegebenenfalls geregelt, einem Ladekondensator zugeführt wird, der für den Auslöser dann die Energiequelle bildet. Der Ladekondensator sorgt dafür, dass die Stromnulldurchgänge und kurze Stromunterbrechungen überbrückt werden.

Diese Form der Energiebereitstellung für den Leistungsschalter birgt das Problem, dass bei Inbetriebnahme des Leistungsschalters noch keine Auslöseenergie zur Verfügung steht, da der Ladekondensator einige Millisekunden zur Aufladung benötigt, so dass hier besondere Maßnahmen getroffen werden müssen. Zum Beispiel werden mehrere, gegenseitig entkoppelte Ladekondensatoren parallel angeordnet.

Außerdem wäre es wünschenswert, die erreichbare Mindest-Schaltzeit, die auch durch die Funktion eines Mikroprozessors in der Auslöseeinheit bestimmt wird, die ebenfalls einige Millisekunden benötigt, weiter zu verkürzen.

Der Erfindung liegt deshalb die Aufgabe zugrunde, einen Niederspannungs-Leistungsschalter anzugeben, der mit einem zusätzlichen schnellen Auslösemagneten bestückt ist, der den Leistungsschalter bei hohen Kurzschlussströmen im überwachten Netz auslöst, auch wenn von dem Energiewandler noch keine Energie zur Auslösung zur Verfügung steht.

Die Aufgabe wird durch die im Anspruch 1 genannten Merkmale gelöst. Zweckmäßige Ausgestaltungen sind Gegenstand der Unteransprüche.

Danach besteht der schnelle Magnetauslöser aus einem Auslösemagneten und einem den Auslösemagneten im fehlerfreien Betrieb kurzschließenden, den Kurzschluss bei einem Überstrom im zu überwachenden Hauptstrompfad aufhebenden Ansteuerelement und ist in den Strompfad zwischen Energiewandler und Ladekondensator geschaltet. Im Kurzschlussfall fließt dann ein hoher Strom direkt von dem Energiewandler über den Auslösemagneten, der eine sofortige Auslösung bewirkt.

Bei Leistungsschaltern, die wie üblicherweise aus einer Auslöseeinheit und einer Schalteinheit bestehen, wobei die Auslöseeinheit den Ladekondensator enthält und der schnelle Magnetauslöser folgegemäß in die Schalteinheit integriert ist, ist der schnelle Magnetauslöser zweckmäßig über Steckkontakte mit dem Strompfad der Auslöseeinheit verbunden, der Gegenkontakte an einer Unterbrechungsstelle des Strompfades aufweist. Die Steckkontakte befinden sich dann zweckmäßig an der Rückfront der Auslöseeinheit.

Soll die Schnellauslösung nur als Option vorgesehen sein, können die Gegenkontakte zwecks Außerbetriebnahme der Schnellauslösung durch einen Kurzschlussstecker oder einen Schalter überbrückbar sein.

Das Ansteuerelement für den schnellen Auslösemagneten kann beispielsweise ein Reedkontakt sein. Es kann auch durch einen Schalttransistor realisiert werden, der von einem Stromsensor oder einem Feldsensor an dem zu überwachenden Hauptstrompfad angesteuert wird und bei einem Überstrom sperrt und den Strom somit durch den Auslösemagneten leitet.

Die Erfindung hat den Vorteil, dass die Auslösung des Leistungsschalters bei einem Kurzschluss mit entsprechend hohem Kurzschlussstrom sehr schnell erfolgt, wobei die Auslöseenergie von dem vorhandenen Energiewandler zur Verfügung gestellt wird, und dass selbst dann eine Schnellauslösung erfolgt, wenn der Leistungsschalter beim Einschalten auf einen Kurzschluss schaltet. Die Anordnung von mehreren Ladekondensatoren kann vermieden werden.

Die Erfindung wird nachfolgend in Ausführungsbeispielen anhand der zugehörigen Zeichnungen näher erläutert. Es zeigen:
- Figur 1: eine erste Variante einer Energieversorgungsschaltung für einen Niederspannungs-Leistungsschalter mit einem integrierten schnellen Auslösemagneten;
- Figur 2: eine zweite Variante einer Energieversorgungsschaltung und
- Figur 3: eine weitere Ausführungsvariante eines Ansteuer-elementes.

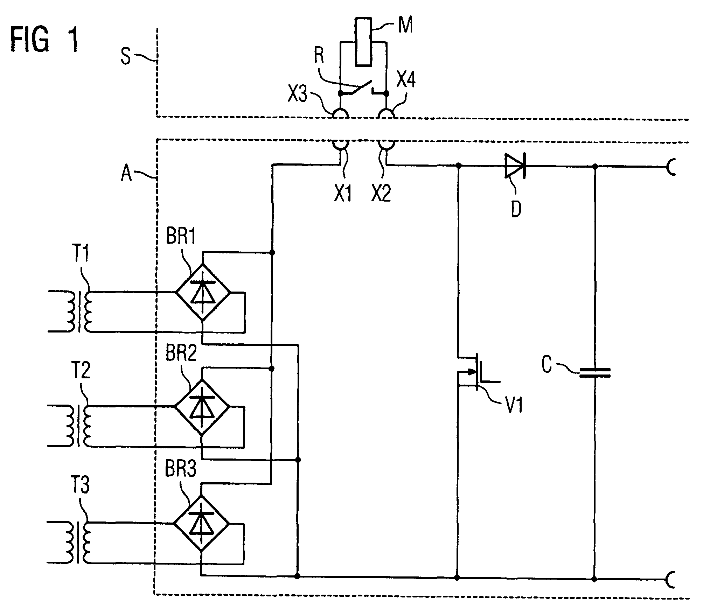

Figur 1 zeigt eine dreiphasige Energieversorgungsschaltung für einen Niederspannungs-Leistungsschalter. Die Sekundärwicklungen von drei Stromwandlern T1, T2, T3 sind jeweils auf den Eingang einer Brückenschaltung BR1, BR2, BR3 geführt, deren Gleichspannungsausgänge parallel geschaltet sind und zu einem Ladekondensator C einer hier nicht näher gezeigten Auslöseschaltung einer Auslöseeinheit A führen. Der Ladekondensator C sorgt dafür, dass die Funktion der Auslöseeinheit A aufrecht erhalten bleibt, wenn Stromunterbrechungen oder kurze Niedrigstromzeiten im Netz auftreten. Die Spannung am Ladekondensator C wird, wie hier angedeutet ist, von einem Schalttransistor V1 geregelt. Eine Diode D verhindert die Entladung des Ladekondensators C bei angesteuertem Schalttransistor V1.

In den positiven Strompfad ist durch zum Beispiel an der Rückfront der Auslöseeinheit A nach außen geführte Steckkontakte X1, X2 eine Unterbrechungsstelle vorgesehen, die durch einen einsteckbaren Kurzschlussstecker überbrückt werden kann, wenn von dem Betreiber einer Anlage keine Schnellauslösung gewünscht wird. Wird dagegen eine Schnellauslösung gefordert, so wird der Kurzschlussstecker entfernt. Die Steckkontakte X1, X2 treffen auf Steckkontakte X3, X4 einer zugehörigen Schalteinheit S, die einen hier nicht gezeigten Auslösemechanismus und einen Auslösemagneten zur Unterbrechung eines überwachten Hauptstrompfades enthält. Zusätzlich enthält sie einen schnellen Auslösemagneten M, der mit den Steckkontakten X3, X4 verbunden ist. Der schnelle Auslösemagnet M wird durch einen Reedkontakt R überbrückt, der bei normalem Betrieb des Leistungsschalters geschlossen ist und somit den Magneten M kurzschließt. Der Reedkontakt R ist so dimensioniert, dass er bei hohen Strömen, die einem hohen Kurzschlussstrom im überwachten Netz entsprechen, öffnet, so dass der Strom nunmehr durch den schnellen Auslösemagneten M fließt und diesen erregt, wodurch eine Schnellauslösung des Leistungsschalters innerhalb weniger Millisekunden bewirkt wird.

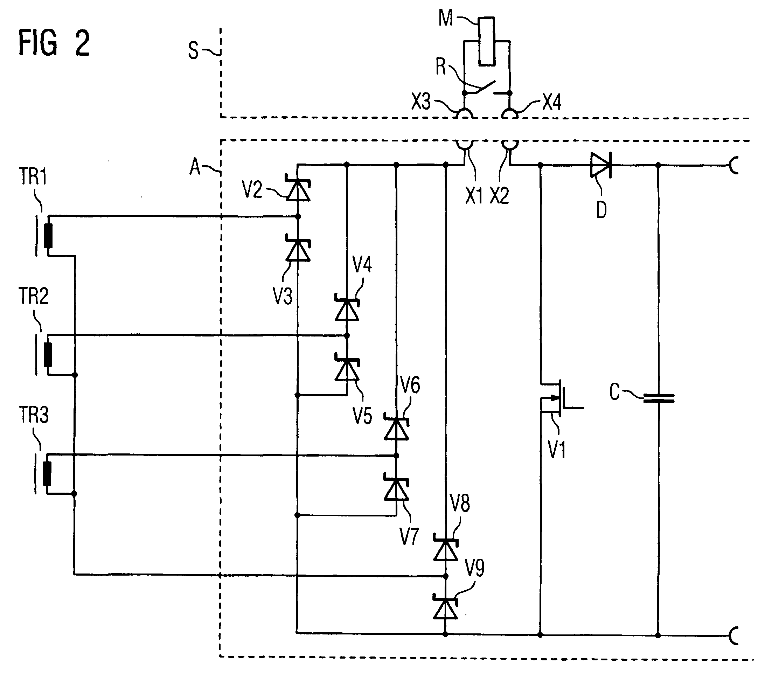

Figur 2 zeigt die erfindungsgemäße Maßnahme im Zusammenhang mit einer Energieversorgungsschaltung mit einer Drehstrombrückenschaltung. Die Schaltung hat den Vorteil, dass sich sekundärseitig die Ströme der Stromwandler T1, T2, T3, die die dreiphasigen Ströme im Netz nachbilden, durch die Anordnung der Ventile V2 bis V9 addieren. Die Funktion des schnellen Auslösemagneten M entspricht der, die im Zusammenhang mit der Schaltung zu Figur 1 erläutert wurde.

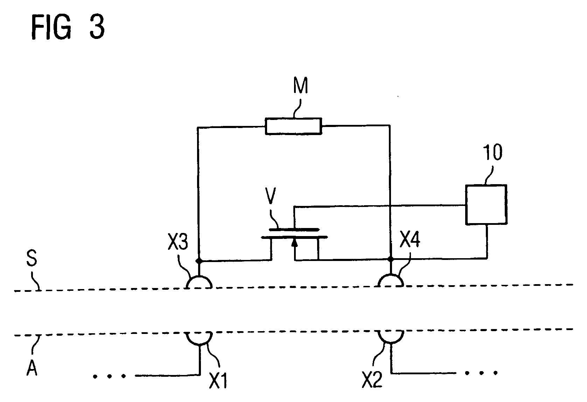

Figur 3 zeigt in einer Detailansicht die Schalteinheit S. Anstelle des parallel zum Magneten geschalteten Reedkontaktes R (Figuren 1 und 2) ist hier das Ansteuerelement für den Auslösemagneten M von einem Schalttransistor V gebildet, der von einem Sensor 10 ansteuerbar ist. Der Sensor 10 ist beispielsweise ein den Strom im Hauptstrompfad überwachender Stromsensor oder ein den Strom im Hauptstrompfad überwachender Feldsensor.

## Patentansprüche

1. Niederspannungs-Leistungsschalter mit zusätzlicher Schnellauslösung durch einen schnellen Magnetauslöser und einem vom zu überwachenden Hauptstrompfad gespeisten Energiewandler, dessen Gleichspannungsausgang an einen Ladekondensator (C) einer Auslöseschaltung geführt ist,
**dadurch gekennzeichnet, dass** der schnelle Magnetauslöser aus einem Auslösemagneten (M) und einem den Auslösemagneten (M) im fehlerfreien Betrieb kurzschließenden, den Kurzschluss bei einem Überstrom im zu überwachenden Hauptstrompfad aufhebenden Ansteuerelement besteht, und der schnelle Magnetauslöser in den Strompfad zwischen Energiewandler und Ladekondensator (C) geschaltet ist.

2. Niederspannungs-Leistungsschalter nach Anspruch 1,
**dadurch gekennzeichnet, dass** er eine Auslöseeinheit (A) und eine Schalteinheit (S) aufweist, wobei die Auslöseeinheit (A) den Ladekondensator (C) enthält und der schnelle Magnetauslöser in die Schalteinheit (S) integriert und über Steckkontakte (X3, X4) mit dem Strompfad der Auslöseeinheit (A) verbunden ist, der Steckkontakte (X1, X2) an einer Unterbrechungsstelle des Strompfades aufweist.

3. Niederspannungs-Leistungsschalter nach Anspruch 2,
**dadurch gekennzeichnet, dass** die Steckkontakte (X1, X2) zwecks Außerbetriebnahme der Schnellauslösung durch einen Kurzschlussstecker überbrückbar sind.

4. Niederspannungs-Leistungsschalter nach Anspruch 2,
**dadurch gekennzeichnet, dass** die Steckkontakte (X1, X2) zwecks Außerbetriebnahme der Schnellauslösung durch einen Schalter überbrückbar sind.

5. Niederspannungs-Leistungsschalter nach einem der vorhergehenden Ansprüche,
**dadurch gekennzeichnet, dass** das Ansteuerelement für den Auslösemagneten (M) ein Reedkontakt (R) ist.

6. Niederspannungs-Leistungsschalter nach einem der Ansprüche 1 bis 4,
**dadurch gekennzeichnet, dass** das Ansteuerelement für den Auslösemagneten (M) ein Schalttransistor (V) ist, der von einem den Strom im Hauptstrompfad überwachenden Stromsensor angesteuert ist.

7. Niederspannungs-Leistungsschalter nach einem der Ansprüche 1 bis 4,
**dadurch gekennzeichnet, dass** das Ansteuerelement für den Auslösemagneten (M) ein Schalttransistor (V) ist, der von einem den Strom im Hauptstrompfad überwachenden Feldsensor angesteuert ist.

## Claims

1. Low-voltage circuit breaker with additional quick-action tripping by means of a quick-action magnet release and an energy converter, which is fed by the main current path to be monitored and whose DC voltage output is connected to a charging capacitor (C) of a tripping circuit, **characterized in that** the quick-action magnet release comprises a tripping magnet (M) and a drive element which short-circuits the tripping magnet (M) during fault-free operation and cancels the short circuit in the event of an excess current in the main current path to be monitored, and the quick-action magnet release is connected in the current path between the energy converter and the charging capacitor (C).

2. Low-voltage circuit breaker according to Claim 1, **characterized in that** it has a tripping unit (A) and a switching unit (S), the tripping unit (A) containing the charging capacitor (C), and the quick-action magnet release being integrated in the switching unit (S) and being connected to the current path of the tripping unit (A) via plug contacts (X3, X4), said current path of the tripping unit (A) having plug contacts (X1, X2) at an interruption point in the current path.

3. Low-voltage circuit breaker according to Claim 2, **characterized in that** the plug contacts (X1, X2) can be bridged by means of a short-circuiting plug for the purpose of taking the quick-action tripping out of operation.

4. Low-voltage circuit breaker according to Claim 2, **characterized in that** the plug contacts (X1, X2) can be bridged by means of a switch for the purpose of taking the quick-action tripping out of operation.

5. Low-voltage circuit breaker according to one of the preceding claims, **characterized in that** the drive element for the tripping magnet (M) is a reed contact (R).

6. Low-voltage circuit breaker according to one of Claims 1 to 4, **characterized in that** the drive element for the tripping magnet (M) is a switching transistor (V) which is driven by a current sensor monitoring the current in the main current path.

7. Low-voltage circuit breaker according to one of Claims 1 to 4, **characterized in that** the drive element for the tripping magnet (M) is a switching transistor (V) which is driven by a field sensor monitoring the current in the main current path.

## Revendications

1. Disjoncteur de basse tension ayant un déclenchement rapide supplémentaire par un déclencheur magnétique rapide et un convertisseur d'énergie alimenté par le trajet de courant principal à contrôler, dont la sortie de tension continue est envoyée à un condensateur (C) de charge d'un circuit de déclenchement,
**caractérisé en ce que** le déclencheur magnétique rapide est constitué d'un aimant (M) de déclenchement et d'un élément de commande court-circuitant l'aimant (M) de déclenchement en fonctionnement sans défaut et mettant fin au court-circuit s'il se produit une surintensité de courant dans le trajet de courant principal à contrôler, et le déclencheur magnétique rapide est monté dans le trajet de courant entre le convertisseur d'énergie et le condensateur (C) de charge.

2. Disjoncteur de basse tension suivant la revendication 1, **caractérisé en ce qu'**il a une unité (A) de déclenchement et une unité (S) de coupure, l'unité (A) de déclenchement comportant le condensateur (C) de charge et le déclencheur magnétique rapide étant intégré dans l'unité (S) de coupure et étant relié par des contacts (X3, X4) à fiche au trajet de courant de l'unité (A) de déclenchement qui a des contacts (X1, X2) à fiche sur un point d'interruption du trajet de courant.

3. Disjoncteur de basse tension suivant la revendication 2, **caractérisé en ce que** les contacts (X1, X2) à fiche peuvent être shuntés, en vue de la mise hors service du déclenchement rapide, par une fiche de court-circuit.

4. Disjoncteur de basse tension suivant la revendication 2, **caractérisé en ce que** les contacts (X1, X2) à fiche peuvent être shuntés, en vue de la mise hors de fonctionnement du déclenchement rapide, par un interrupteur.

5. Disjoncteur de basse tension suivant l'une des revendications précédentes, **caractérisé en ce que** l'élément de commande de l'aimant (M) de déclenchement est un contact (R) Reed.

6. Disjoncteur de basse tension suivant l'une des revendications 1 à 4, **caractérisé en ce que** l'élément de commande de l'aimant (M) de déclenchement est un transistor (V) de commutation qui est commandé par un capteur de courant contrôlant le courant dans le trajet de courant principal.

7. Disjoncteur de basse tension suivant l'une des revendications 1 à 4, **caractérisé en ce que** l'élément de commande de l'aimant (M) de déclenchement est un transistor (V) de commutation qui est commandé par un capteur de champ contrôlant le courant dans le trajet de courant principal.
